# FASCICULE DE BREVET EUROPEEN

(11) **EP 4 034 819 B1**
(45) Date de publication et mention de la délivrance du brevet: **02.08.2023**
(21) Numéro de dépôt: 20781000.3
(22) Date de dépôt: 25.09.2020
(51) Int. Cl.: F24H 1/43, F24H 8/00, F24H 9/14, F28D 7/02, F28D 21/00, F28F 9/00, F28F 9/013, F28F 9/22

(54) **ECHANGEUR DE CHALEUR À CONDENSATION**
KONDENSATIONSWÄRMETAUSCHER
CONDENSATION HEAT EXCHANGER

(30) Priorité: 26.09.2019 FR 1910666
(43) Date de publication de la demande: 03.08.2022
(73) Titulaire: SERMETA, 29600 Morlaix (FR)
(72) Inventeur: LE MER, Joseph, 29252 Plouezoch (FR)
(74) Mandataire: Regimbeau
(86) Numéro de dépôt international: PCT/EP2020/076946
(87) Numéro de publication internationale: WO 2021/058762

(56) Documents cités:
- WO-A1-2015/140664
- FR-A1- 2 850 451
- FR-A1- 3 072 163
- KR-A- 20140 127 535
- US-A1- 2018 087 806

## Description

### DOMAINE DE L'INVENTION

L'invention se situe dans le domaine des échangeurs de chaleur à condensation.

La présente invention concerne plus précisément la structure de l'enveloppe de tels échangeurs.

### ETAT DE LA TECHNIQUE

Afin de pouvoir mettre sur le marché, des échangeurs de chaleur à condensation à moindre coût, il a été nécessaire de revoir la structure globale des échangeurs existants et notamment de diminuer le nombre de leurs pièces, ce qui permet de réduire leurs coûts de fabrication et d'assemblage.

On connaît par exemple d'après le document WO2004/036121, un échangeur de chaleur à condensation comprenant au moins un faisceau de tube, enroulé en hélice, en matériau thermiquement bon conducteur et à l'intérieur duquel circule de l'eau à réchauffer. Ce tube est lui-même disposé à l'intérieur d'une enveloppe et un brûleur est disposé axialement à l'intérieur dudit enroulement, de sorte que les gaz chauds produits par le brûleur traversent les espaces entre les spires adjacentes et réchauffent l'eau circulant dans le tube.

L'enveloppe est réalisée dans une matière plastique résistant à la chaleur.

Toutefois, afin de limiter le mouvement d'écartement des spires du tube, dans la direction axiale, ce mouvement résultant de la pression interne de l'eau qui circule dans le tube, il est nécessaire d'avoir une plaque de retenue à chaque extrémité de l'enroulement et des tirants de contention mécanique axiale. Ceci permet d'éviter que les efforts de poussée résultant de cette pression ne soient transmis à l'enveloppe.

En outre, l'enveloppe, réalisée dans une matière plastique, présente la forme de deux demi-coques, assemblées entre elles par soudure, vis ou clips et une virole est disposée entre le tube et l'intérieur de l'enveloppe en matière plastique, afin d'assurer une fonction d'écran thermique, apte à isoler l'enveloppe, de la chaleur émise par les gaz brûlés.

Un tel échangeur très performant comprend donc de nombreuses pièces, ce qui le rend plus coûteux et plus long à fabriquer.

On connaît déjà d'après le document WO 2015/140664, un échangeur de chaleur qui comprend une enveloppe, à l'intérieur de laquelle est monté un tube enroulé en hélice et à l'intérieur duquel de l'eau peut circuler, une façade qui supporte un brûleur, et un élément de séparation supportant un disque de matériau réfractaire.

Avant assemblage, l'enveloppe comprend deux demi-coquilles, chaque demi-coquille comprenant une partie semi-cylindrique monobloc avec une partie semi-circulaire. L'assemblage des deux demi-coquilles est effectué par soudure le long de leurs trois côtés rectilignes respectifs.

Ce document ne décrit ni ne suggère le fait d'avoir une enveloppe constituée avant assemblage d'une virole métallique tubulaire et d'un fond formé dans une matière plastique composite, ni l'assemblage de ces deux éléments par coopération de languettes et de fentes.

En conséquence, les deux demi-coquilles doivent être réalisées dans un matériau de forte épaisseur devant à la fois présenter une très bonne tenue mécanique et une très bonne tenue thermique, pour résister aux gaz chauds et assurer la compression du tube. Cet échangeur de chaleur met donc en oeuvre des matériaux plus onéreux.

### EXPOSE DE L'INVENTION

Un but de l'invention est donc de limiter le nombre total de pièces d'un échangeur de chaleur à condensation, de simplifier l'assemblage de ces pièces et enfin de supprimer les tirants de contrainte axiale, tout en proposant un échangeur fiable et dont l'enveloppe ne se déforme pas.

Un autre but de l'invention est de réaliser un échangeur de chaleur moins coûteux que ceux connus de l'état de la technique, tout en garantissant la fonction de contrainte axiale du tube enroulé.

Il a donc été nécessaire de revoir complètement la conception d'un tel échangeur de chaleur.

A cet effet, l'invention concerne un échangeur de chaleur à condensation comprenant :
- au moins un tube enroulé en hélice, réalisé dans un matériau thermiquement bon conducteur, et à l'intérieur duquel peut circuler un fluide à réchauffer, tel que de l'eau,
- une enveloppe à l'intérieur de laquelle ledit tube est monté, cette enveloppe étant munie d'une manchette d'évacuation des gaz, d'un fond et d'une façade, qui supporte des moyens d'amenée et/ou de production d'un gaz chaud à l'intérieur de l'enveloppe, tel un bruleur à gaz ou à fioul,
- un déflecteur qui comprend un disque en matériau thermiquement isolant, porté par une armature en tôle métallique, ledit déflecteur étant positionné par rapport au tube enroulé en hélice, de façon à délimiter avec ladite façade, une chambre de combustion.

Conformément à l'invention, ladite enveloppe comprend un corps constitué par une virole métallique tubulaire, cette virole tubulaire étant fermée à l'une de ses deux extrémités par ladite façade et à son autre extrémité par ledit fond, ladite virole tubulaire et ledit fond sont distincts avant assemblage, ledit fond est formé dans une matière plastique composite, l'un des deux bords de la virole tubulaire, dit « bord arrière », présente sur au moins une partie de sa circonférence, une pluralité de découpes délimitant des languettes de fixation, le fond présente à sa périphérie, une pluralité de fentes de fixation, disposées le long d'au moins une partie de sa circonférence, chaque fente de fixation étant dimensionnée de façon qu'une languette de fixation puisse y être insérée, chaque fente de fixation étant bordée longitudinalement par une première nervure longitudinale, qui fait saillie vers l'extérieur, et ladite languette de fixation est repliée deux fois autour de ladite première nervure, de sorte que la virole est fixée audit fond et que ledit enroulement hélicoïdal de tube est contraint axialement à ses deux extrémités entre le fond et la façade.

Grâce à ces caractéristiques de l'invention, les tirants sont supprimés, le nombre global de pièces est réduit et le coût est moindre tout en empêchant que le tube enroulé en hélice ne se dilate axialement puisque l'accrochage du fond et de la virole par double repliement des languettes est suffisant pour empêcher toute déformation de l'enveloppe. De plus, le fond et la virole sont réalisés dans des matériaux différents mieux appropriés aux contraintes qu'ils subissent.

Selon d'autres caractéristiques avantageuses et non limitatives de l'invention, prises seules ou en combinaison :
- le fond comprend une cloison externe, un renfoncement ménagé dans cette cloison externe, ce renfoncement faisant saillie vers l'extérieur de l'échangeur et débouchant à la partie supérieure de celui-ci dans la manchette d'évacuation des gaz, et une cloison interne joignant les deux côtés de la cloison externe situés de part et d'autre de l'embouchure du renfoncement, cette cloison interne délimitant avec le renfoncement un canal d'évacuation des gaz débouchant dans la manchette d'évacuation des gaz, le bord arrière de ladite virole tubulaire présente une pluralité de découpes délimitant soit des languettes de fixation sur la totalité de sa circonférence, soit des languettes de fixation sur une partie de sa circonférence et au moins une languette d'accrochage sur le reste de sa circonférence, cette cloison interne est munie d'au moins une fente de réception soit d'une languette d'accrochage soit d'une languette de fixation, et la languette de fixation ou la languette d'accrochage qui est insérée dans cette fente de réception est repliée contre ladite cloison interne, pour assurer la fixation de la virole avec ledit fond et la contrainte axiale dudit tube enroulé en hélice à l'une de ses extrémités par la façade et à son autre extrémité par ladite cloison externe et par ladite cloison interne du fond ;
- le bord arrière de ladite virole métallique tubulaire est muni d'une pluralité de découpe délimitant des languettes de fixation et d'une pluralité de découpes délimitant au moins une languette d'accrochage et en ce que chaque fente de réception ménagée dans la cloison interne, dite fente d'accrochage, est dimensionnée de façon qu'une languette d'accrochage puisse y être insérée, cette languette d'accrochage étant repliée une seule fois contre la face de la cloison interne située en regard dudit canal d'évacuation des gaz ;
- le renfoncement ménagé dans la cloison externe présente une paroi arrière bordée par deux parois latérales, la manchette d'évacuation des gaz comprend un couvercle destiné à être rapporté et fixé sur le fond, ce couvercle comprend une cloison en retour, cette cloison en retour délimitant avec ladite cloison interne et les deux parois latérales, ledit canal d'évacuation des gaz débouchant dans la manchette d'évacuation des gaz, chaque fente de réception ménagée dans la cloison interne, dite fente de fixation, est bordée longitudinalement par une première nervure longitudinale, le bord arrière de ladite virole métallique tubulaire est muni de languettes de fixation sur la totalité de sa périphérie, et une languette de fixation est insérée dans chaque fente de fixation et est repliée deux fois autour de ladite première nervure ;
- le fond présente un canal d'évacuation des gaz qui s'étend vers l'extérieur selon la direction axiale longitudinale de l'échangeur, ce canal d'évacuation des gaz rejoignant ladite manchette d'évacuation des gaz, le bord arrière de ladite virole présente lesdites languettes de fixation sur la totalité de sa circonférence et le fond présente sur la totalité de sa circonférence, lesdites fentes de fixation recevant lesdites languettes de fixation ;
- la première nervure longitudinale présente une section transversale carrée ou rectangulaire et la languette de fixation est repliée deux fois à angle droit autour des arêtes saillantes de cette première nervure longitudinale ;
- une couche de colle est disposée entre la paroi radiale interne de la fente de fixation, respectivement de la fente d'accrochage, et la surface de la languette de fixation, respectivement de la languette d'accrochage, située en regard et/ou une couche de colle est disposée entre la paroi radiale externe de la fente de fixation, respectivement de la fente d'accrochage, et la surface de la languette de fixation, respectivement de la languette d'accrochage, située en regard ;
- une deuxième nervure est formée sur le fond à proximité de ladite première nervure pour délimiter avec celui-ci une cavité, la largeur et la profondeur de ladite cavité, ainsi que la longueur de la languette de fixation, sont dimensionnées de sorte que la languette de fixation est repliée une troisième fois vers l'extérieur de l'échangeur et que son extrémité libre prend appui contre la face de la deuxième nervure située en regard de la première nervure ;
- une deuxième nervure est formée sur le fond à proximité de ladite première nervure pour délimiter avec celui-ci une cavité et une couche de résine est disposée dans ladite cavité, de façon à recouvrir l'extrémité de la languette de fixation ;
- ladite virole est formée d'une bande de tôle métallique repliée et/ou recourbée sur elle-même et dont les deux extrémités sont assemblées, de préférence selon une ligne de soudure ;
- ladite virole est réalisée en acier inoxydable ;
- l'armature dudit déflecteur est insérée entre deux spires adjacentes du tube et définit avec ledit fond, une chambre de condensation ;
- l'armature dudit déflecteur est insérée entre la dernière spire, dite "arrière" du tube enroulé en hélice et le fond et plusieurs entretoises sont disposées entre ledit fond et ladite armature, pour ménager entre ce fond et cette armature, un espace de circulation des gaz raccordé à ladite manchette d'évacuation des gaz.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
La figure 1 est une vue d'ensemble des différentes pièces constitutives de l'échangeur de chaleur conforme à l'invention, sans le brûleur.
La figure 2 est une vue en perspective et de face des pièces de l'échangeur de la figure 1, une fois assemblées.
La figure 3 est une vue en perspective et de l'arrière des pièces de l'échangeur de la figure 1, une fois assemblées.
La figure 4 est une vue en coupe transversale de l'échangeur de la figure 2, prise selon le plan de coupe passant par la ligne IV-IV de la figure 2, et sur laquelle le brûleur a été ajouté.
La figure 5 est une vue en coupe transversale de l'échangeur de la figure 2, prise selon le plan de coupe passant par la ligne V-V de la figure 2, sur laquelle le brûleur a été ajouté.
La figure 6 est une vue en perspective de l'enveloppe.
La figure 7 est une vue en perspective et de dessus d'une partie du fond.
La figure8 est une vue en perspective et de l'arrière, d'une partie des pièces de l'échangeur montrant plusieurs languettes de fixation de la virole engagées dans les fentes de fixation du fond.
La figure 9 est une vue similaire à celle de la figure 8, dans laquelle les languettes de fixation engagées dans les fentes de fixation ont été repliées deux fois sur elles-mêmes, autour d'une première nervure de fixation.
La figure 10 est une vue en coupe transversale et de détail, d'une languette de fixation de la virole, engagée dans une fente de fixation du fond et repliée deux fois.
La figure 11 est une vue similaire à la figure 10, sur laquelle de la colle a été ajoutée entre la languette et la fente ménagée dans le fond.
La figure 12A est une vue similaire à la figure 10, sur laquelle de la colle a été ajoutée sur la partie recourbée de la languette, du côté extérieur du fond.
La figure 12B représente deux languettes et deux fentes de la figure 12A mais en vue de dessus.
La figure 13A est une variante de la figure 10, sur laquelle la languette de fixation a été repliée trois fois.
La figure 13B représente deux languettes et deux fentes de la figure 13A mais en vue de dessus.
La figure 14A est une vue similaire à la figure 10, sur laquelle de la colle a été ajoutée entre la première nervure de fixation et une deuxième nervure de fixation, du côté extérieur du fond.
La figure 14B représente deux languettes et deux fentes de la figure 14A mais en vue de dessus.
La figure 15 est une vue en coupe transversale et de détail, d'une languette d'accrochage de la virole, engagée dans une fente d'accrochage du fond et repliée une fois.
La figure 16 est un schéma représentant un effort de traction appliqué à la virole, dans le cas où la languette de fixation ne serait pas retenue dans une fente.
La figure 17 est un schéma représentant le résultat de la traction appliqué à la virole, dans le cas de la figure 16.
La figure18 est une vue en coupe transversale d'un autre mode de réalisation de l'échangeur.
La figure 19 est une vue en coupe d'une autre variante de réalisation de l'échangeur.
La figure 20 est une vue en coupe montrant une autre disposition du déflecteur.

### DESCRIPTION DETAILLEE DE L'INVENTION

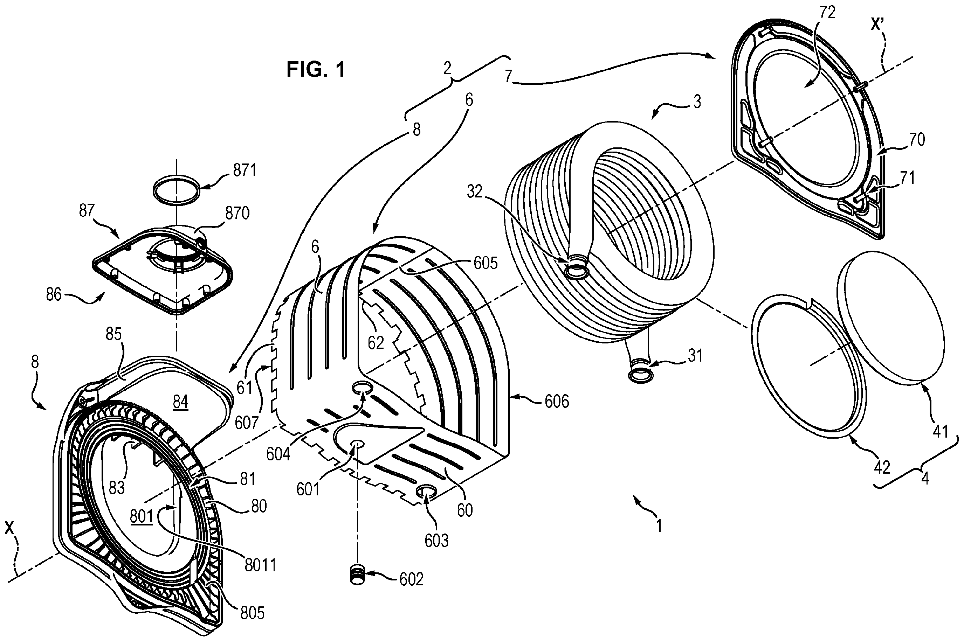

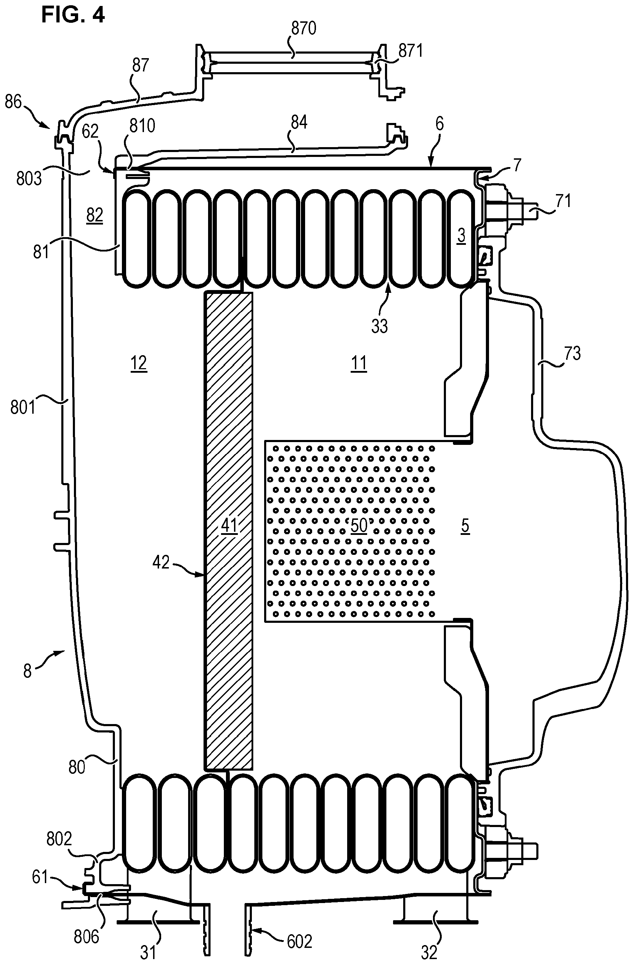

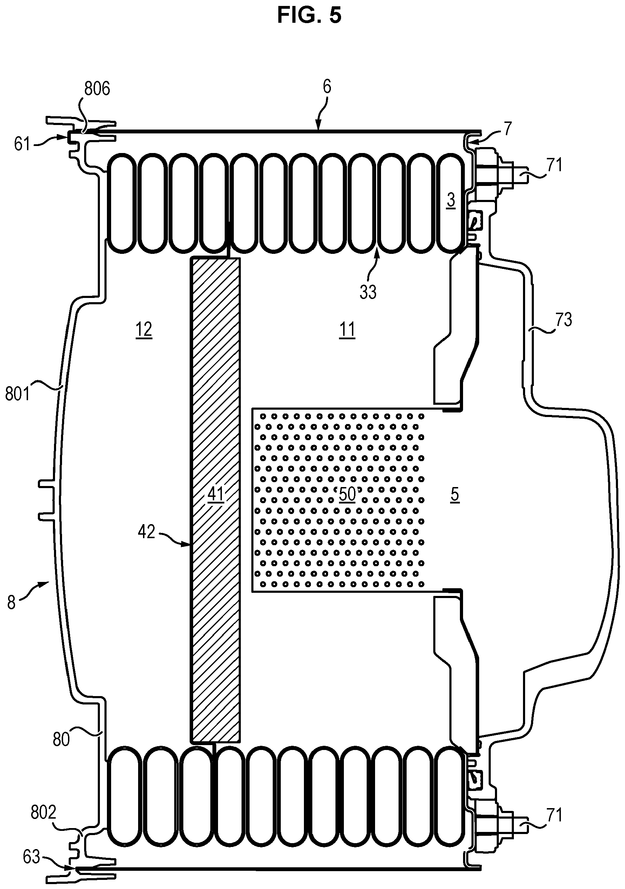

En se reportant à la vue d'ensemble de la figure 1, on peut voir que l'échangeur de chaleur à condensation 1, conforme à l'invention comprend une enveloppe 2, au moins un tube 3, un déflecteur 4, et des moyens 5 d'amenée de gaz chauds ou de production de gaz chauds, ces derniers n'étant visibles que sur les figures 4 et 5.

L'enveloppe 2 comprend une virole tubulaire 6 formant le corps de l'enveloppe, une façade 7 et un fond 8. La façade 7 supporte lesdits moyens 5 d'amenée de gaz chauds ou de production de gaz chauds, comme cela sera décrit ultérieurement. Par ailleurs, comme on peut le voir sur la figure 1, la virole tubulaire 6 et le fond 8 sont distincts avant leur assemblage qui sera décrit ultérieurement.

Les figures 1 à 4 représentent l'enceinte 1 dans sa position normale d'utilisation. Dans la suite de la description et des revendications, les termes « supérieur » ou « inférieur » sont donc à considérer par rapport à cette position normale d'utilisation.

Le tube 3 est enroulé sur lui-même en hélice, de façon à former un enroulement hélicoïdal, d'axe longitudinal X-X'. Le tube 3 présente deux extrémités formant une embouchure d'entrée 31 et une embouchure de sortie 32.

Il est réalisé dans un matériau thermiquement bon conducteur, notamment en métal, de façon avantageuse en acier inoxydable. Il est destiné à recevoir un fluide à réchauffer, tel que de l'eau.

Comme on peut le voir sur les figures 4 et 5, il existe un interstice 33 de valeur calibrée, constante ou sensiblement constante, entre deux spires voisines du tube 3. Bien que sur ces figures, le tube 3 présente une section transversale aplatie et ovale, on notera qu'il pourrait présenter n'importe quelle autre section.

Le tube 3 est destiné à être monté à l'intérieur de l'enveloppe 2, dont les composants vont maintenant être décrits plus en détail. Bien que cela ne soit pas représenté il serait également possible d'avoir plusieurs tubes 3 enroulés en hélice dans l'enveloppe 2, ces enroulements étant coaxiaux.

La virole tubulaire 6 est avantageusement réalisée à partir d'une bande de tôle métallique, de préférence en acier inoxydable. De façon avantageuse, cette tôle est d'une épaisseur inférieure ou égale à 1 mm.

Cette bande de tôle présente avantageusement une partie centrale dite « paroi de base » 60. Cette paroi de base 60 est légèrement en pente vers son centre, ce qui permet l'évacuation des condensats par gravité, via un orifice de sortie 601, connecté à un conduit d'évacuation 602 des condensats.

La paroi de base 60 est également pourvue de deux ouvertures 603,604. Lorsque le tube 3 est monté à l'intérieur de la virole 6, son embouchure d'entrée 31 et son embouchure de sortie 32 sont serties et/ou soudées de manière étanche aux gaz, respectivement dans les ouvertures 603 et 604 précitées.

De façon avantageuse, les deux extrémités de la bande de tôle, situées de part et d'autre de la paroi de base 60, sont repliées sensiblement à angle droit par rapport à celle-ci, puis recourbées et leurs deux extrémités libres sont soudées le long d'une ligne de soudure 605.

La virole tubulaire 6, ainsi formée, présente un bord avant 606 et un bord arrière opposé 607.

La façade 7 présente à sa périphérie un rebord 70, qui est fixé, de préférence soudé, de manière étanche aux gaz, sur le bord avant 606 de la virole annulaire 6.

La façade 7 est munie de plusieurs goujons 71, ici au nombre de quatre, qui font saillie vers l'extérieur de l'échangeur 1. La façade 7 comprend une ouverture centrale 72, apte à être obturée par une porte 73, cette dernière n'étant visible que sur les figures 4 et 5.

La porte 73 est fixée sur la façade 7 par l'intermédiaire des goujons 71. La porte 73 supporte dans sa partie centrale, un brûleur 50, par exemple un brûleur à gaz ou à fioul, qui constitue un exemple de réalisation d'un moyen de production d'un gaz chaud 5. Ce brûleur pourrait être remplacé par des moyens d'amenée d'un gaz chaud (par exemple ventilateur), ce gaz chaud ayant été produit en dehors de l'enceinte (enveloppe).

La porte 73 pourrait également être fixée différemment sur la façade 7.

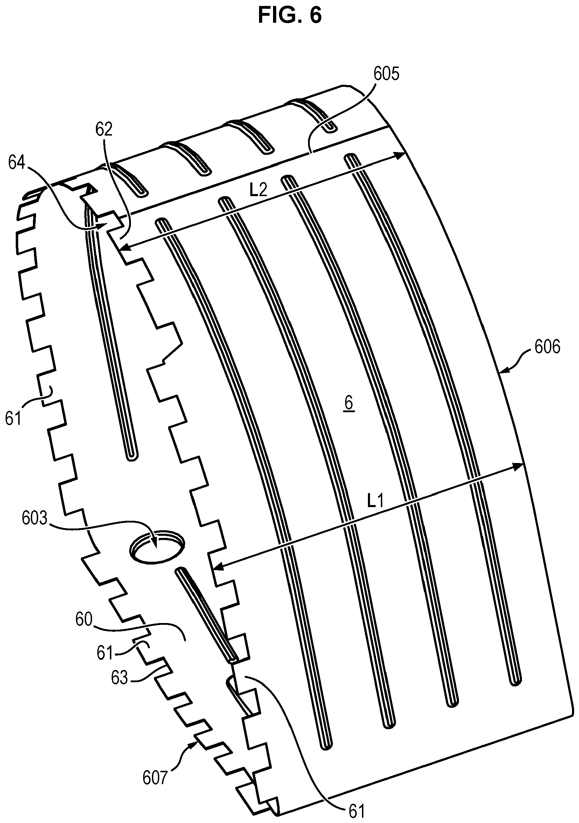

Comme cela apparaît mieux sur la figure 6, qui représente un premier mode de réalisation de la virole 6, le bord arrière 607 présente à sa périphérie, une pluralité de découpes délimitant une première série de languettes, dénommées ci-après « languettes de fixation » 61 et au moins une autre languette dénommée ci-après « languette d'accrochage » 62, afin de distinguer leur mode de fixation sur le fond 8. Les languettes 61 sont séparées entre elles par des découpes (encoches) 63 et les languettes 62 par des découpes (encoches) 64.

Les languettes de fixation 61 sont formées sur la quasi-totalité du bord 607, à l'exception de la partie supérieure incurvée de ce bord, c'est-à-dire dans l'exemple de réalisation représenté sur les figures, la partie située de part et d'autre de la ligne de soudure 605. C'est dans cette partie supérieure incurvée du bord 607 que les languettes d'accrochage 62 sont formées.

De façon avantageuse, les découpes sont faites de façon que les languettes de fixation 61 et les languettes d'accrochage 62 présentent une forme rectangulaire. En outre, de préférence, les découpes sont faites de façon que les languettes d'accrochage 62 soient en retrait par rapport aux languettes de fixation 61. En d'autres termes, la longueur L1 entre le bord avant 606 et l'extrémité libre d'une languette de fixation 61 est supérieure à la longueur L2 entre le bord avant 606 et l'extrémité libre d'une languette d'accrochage 62. Le rôle de ce décalage sera expliqué ultérieurement.

Le fond 8 est réalisé en matière plastique composite. Une telle matière plastique comprend au moins deux constituants différents. A titre d'exemple illustratif, cette matière plastique composite peut être du polypropylène chargé en fibres, notamment chargé avec des fibres de verre.

Comme cela apparait mieux sur les vues en coupe des figures 4, 5 et 7, qui illustrent un premier mode de réalisation du fond 8, ce fond 8 comprend une cloison dite « externe » 80, qui est plane à l'exception d'une zone centrale qui forme un renfoncement 801 saillant vers l'extérieur et d'une zone périphérique qui forme un rebord périphérique 802 également saillant vers l'extérieur.

Le contour de la cloison externe 80 correspond sensiblement à celui du bord arrière 607 de la virole 6. En d'autres termes, ce contour présente une forme sensiblement carrée dont le côté supérieur est arrondi.

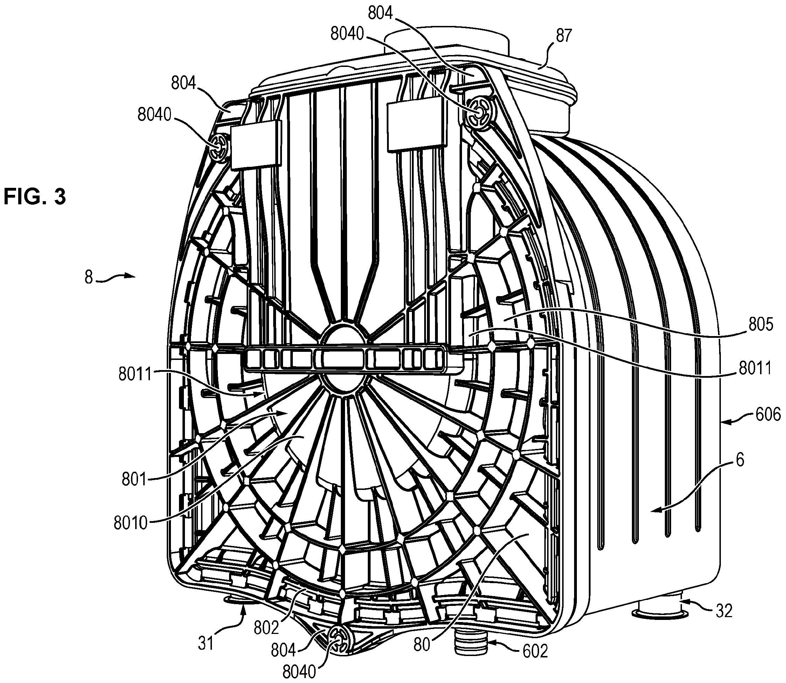

Le renfoncement 801 présente un contour en U qui débouche vers le haut du fond 8. Le renfoncement 801 comprend une paroi arrière 8010 et deux parois latérales 8011 qui définissent la profondeur du renfoncement 801, voir figure 3.

Par ailleurs, à la partie supérieure du fond 8, une portion de cloison, dite « cloison interne » 81, rejoint les deux côtés de la cloison externe 80 situés de part et d'autre de l'embouchure du renfoncement 801 et également les deux parois latérales 8011 de la cloison externe 80 situées de part et d'autre de l'embouchure du renfoncement 801. Sur la figure 1, on peut voir que cette cloison interne 81 est avantageusement en forme d'arc de cercle pour épouser la forme de l'enroulement hélicoïdal du tube 3.

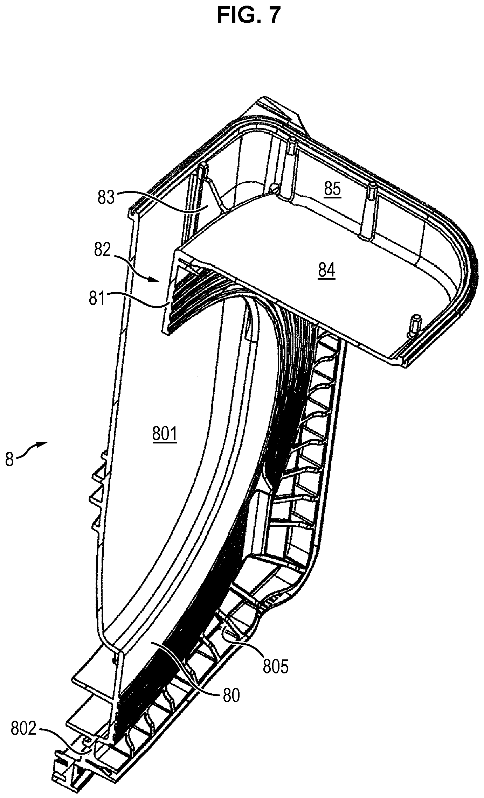

La cloison interne 81 s'étend à distance du renfoncement 801, comme on le voit sur les figures 4 et 7 et ménage avec celui-ci un canal 82 de collecte et d'évacuation des gaz. Des entretoises 83 peuvent être prévues entre la cloison interne 81 et le renfoncement 801, comme on le voit sur les figures 1 et 7.

En outre, la cloison interne 81 se prolonge vers l'avant de l'échangeur (c'est-à-dire vers la façade 7 et dans une direction axiale, par une paroi incurvée 84 dont la concavité épouse le contour de la partie supérieure en arc de cercle de la virole 6. Un rebord vertical 85 entoure la paroi incurvée 84 de façon à définir la partie inférieure d'une manchette d'évacuation des gaz 86. Enfin, un couvercle 87, qui constitue la partie supérieure de la manchette d'évacuation des gaz 86, vient coiffer le rebord 85. Ce couvercle 87 est collé de manière étanche aux gaz à ce rebord 85. Le couvercle 87 est muni d'une ouverture d'échappement 870, située de préférence dans sa partie supérieure. Cette ouverture 870, munie d'un joint 871 permet le raccordement à un tuyau d'échappement des gaz, non représenté sur les figures.

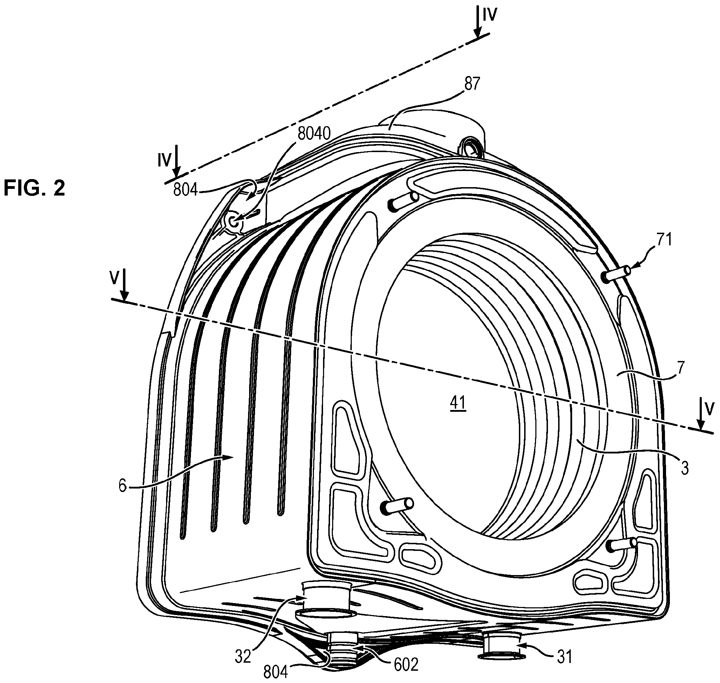

De façon avantageuse, et comme cela apparait mieux sur les figures 2 et 3, la cloison externe 80 peut se prolonger par des oreilles 804, ici par exemple au nombre de trois, munies chacune d'un orifice de fixation 8040, ces derniers permettant la fixation du fond 8 sur une cloison de la chaudière, non représentée sur les figures. Ces orifices 8040 permettent par exemple le passage de vis de fixation. Enfin, de façon avantageuse, la cloison extérieure 80 peut être munie sur sa face extérieure et/ou sa face inférieure de nervures de rigidification 805.

La fixation de la virole 6 sur le fond 8 va maintenant être décrite plus en détails.

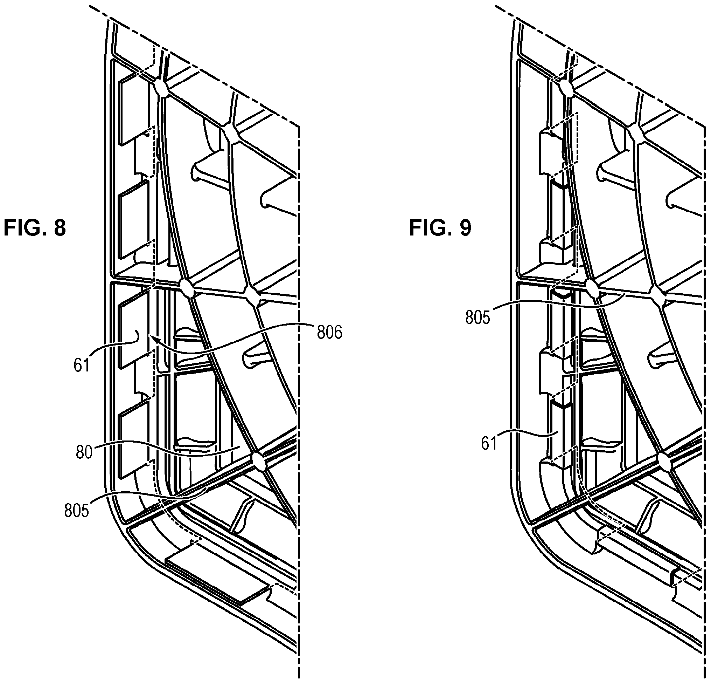

La cloison externe 80 est munie à sa périphérie d'une série de fentes 806, dites « fentes de fixation », qui sont formées au niveau du rebord saillant 802. Ces fentes 806 sont disposées bout à bout de manière circonférentielle sur le fond 8. Ces fentes 806 s'étendent sur tout le tour de la cloison externe 80 à l'exception de sa partie supérieure où débouche le renfoncement 801. Ces fentes de fixation 806 sont dimensionnées pour recevoir les languettes de fixation 61, comme cela apparait mieux sur les figures 8 à 14B.

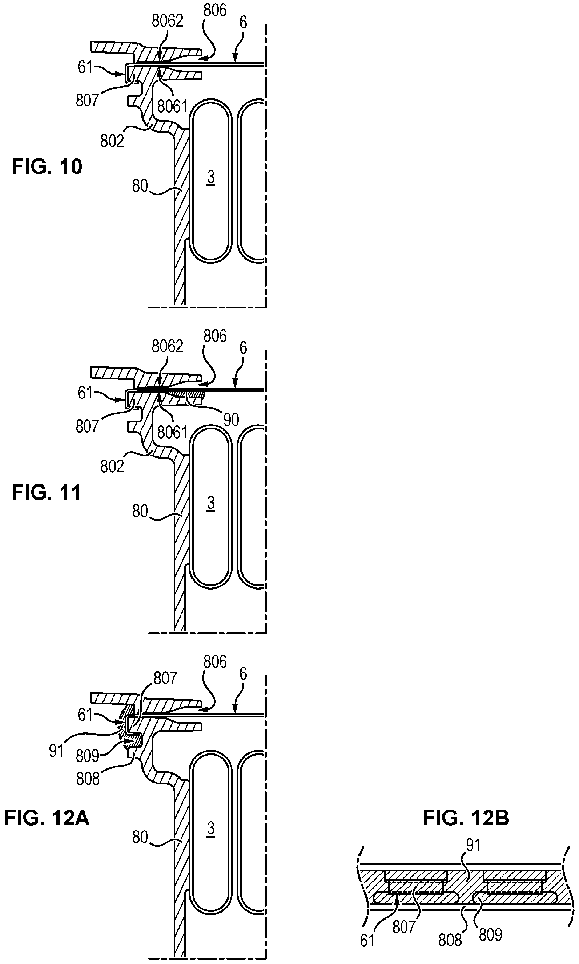

En se reportant aux figures 8 à 10, on peut voir comment une languette de fixation 61 est assemblée dans une fente de fixation 806. Chaque fente de fixation 806 comprend selon la direction radiale de l'échangeur, une paroi intérieure 8061 et une paroi extérieure 8062 (voir figure 10).

Chaque fente de fixation 806 est bordée par une première nervure longitudinale 807, qui fait saillie vers l'extérieur depuis la cloison externe 80, plus précisément depuis le rebord 802 de la cloison externe. Cette première nervure 807 est de préférence située à proximité de la paroi radiale intérieure 8061 de la fente.

De préférence, cette première nervure 807 présente en section transversale une forme carrée ou rectangulaire.

Comme représenté sur la figure 8, la languette de fixation 61 est introduite dans la fente de fixation 806, puis elle est repliée par une opération de sertissage, deux fois, autour de la première nervure longitudinale 807.

Comme on peut le voir sur les figures 8 et 9, la virole 6 est rapprochée du fond 8, de sorte que toutes les languettes de fixation 61 pénètrent dans les fentes de fixation respectives 806, situées en regard.

Dans le cas où la première nervure longitudinale 807 présente une section carrée ou rectangulaire, la languette de fixation 61 est repliée deux fois à angle droit, à savoir une première fois dans la direction radiale de l'échangeur et une seconde fois dans la direction axiale.

Comme on peut le voir sur la figure 4, lorsque les languettes de fixation 61 sont serties, la cloison externe 80 repose contre la dernière spire de l'enroulement du tube 3, située vers l'arrière de l'échangeur et la façade 7 repose contre la première spire de l'enroulement du tube 3, située vers l'avant de l'échangeur.

Ceci permet de réaliser la compression axiale du tube 3.

Enfin, comme on peut le voir sur la partie basse de la figure 5, le fond de l'encoche 63 vient en butée contre la face interne du rebord saillant 802.

La figure 11 représente une variante de réalisation, dans laquelle une couche de colle 90 a été appliquée sur la face intérieure de la languette de fixation 61, avant son introduction à l'intérieur de la fente de fixation 806, de sorte que cette couche de colle 90 se répartisse entre la languette 61 et la paroi radialement intérieure 8061 de la fente 806 et renforce ainsi la fixation de la languette de fixation 61 et donc de la virole 6 sur le fond 8. On notera qu'il serait également possible de prévoir une couche de colle 90 entre la languette 61 et la paroi radicalement extérieure 8062 de la fente, bien que cela ne soit pas représenté sur la figure 11.

Cette couche de colle 90 renforce l'étanchéité aux gaz de l'enveloppe 2. On peut utiliser par exemple une colle silicone.

Les figures 12A et 12B représentent une autre variante de réalisation, dans laquelle une couche de résine 91 a été appliquée sur l'extrémité de la languette de fixation 61, du côté de la face extérieure de la cloison 80. Afin de favoriser la retenue de cette couche de résine 91, de façon avantageuse, une deuxième nervure longitudinale 808 est ménagée, en regard de la première nervure longitudinale 807, de façon à délimiter avec celle-ci une cavité 809 où la résine 91 peut s'accumuler.

Cette résine 91 a pour fonction de renforcer la fixation de la languette de fixation 61 autour de la première nervure 807 et d'empêcher que cette languette ne se déplie.

On notera qu'il est également possible de combiner l'ajout de colle 90 et de résine 91.

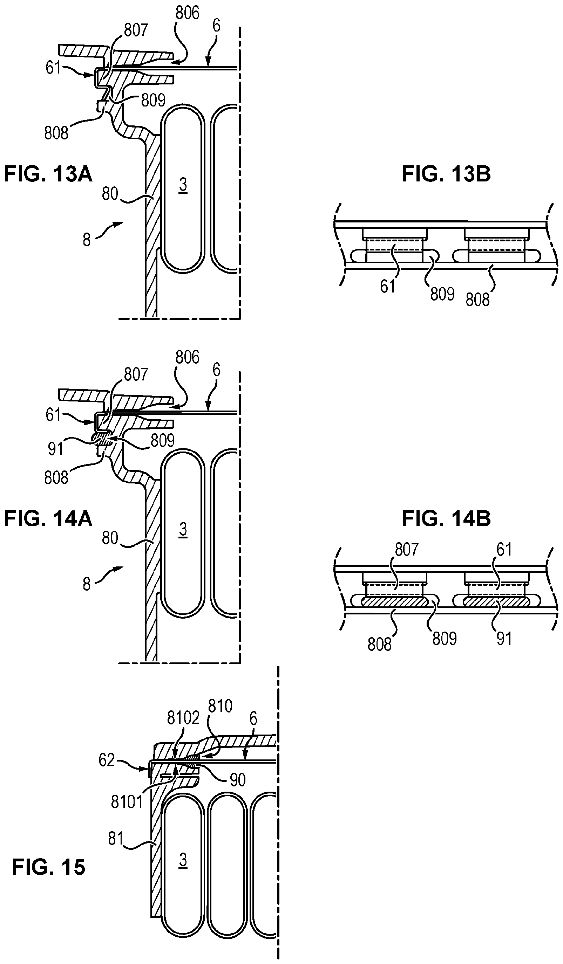

Les figures 13A et 13B représentent une variante de réalisation, dans laquelle la languette de fixation 61 est légèrement plus longue que précédemment, de façon à pouvoir être replié une troisième fois, vers l'extérieur de l'échangeur. Dans ce cas, l'extrémité de la languette de fixation se trouve repliée en V à l'intérieur de la cavité 809, et les deux branches du V, qui ont tendance à s'écarter l'une de l'autre du fait de leur élasticité, ont pour effet de renforcer le blocage de la languette 61 dans la cavité 809 et d'empêcher que cette languette ne sorte de la fente de fixation 806, dans le cas où la pression régnant à l'intérieur du tube 3 aurait tendance à écarter les spires du tube en direction axiale.

Bien que cela ne soit pas représenté sur les figures 13A et 13B, il est également possible de prévoir une couche de colle 90 entre la languette de fixation 61 et l'une ou l'autre des parois 8061, 8062 de la fente 806 et/ou de rajouter une couche de résine 91 dans la cavité 809, en recouvrant ainsi l'extrémité de la languette 61, comme décrit précédemment en liaison avec les figures 11 à 12B.

Les figures 14A et 14B représentent une autre variante de réalisation simplifiée par rapport à celle des figures 12A et 12B, dans laquelle la couche de résine 91 est appliquée uniquement à l'intérieur de la cavité 809 et donc uniquement sur l'extrémité de la languette 61.

La figure 15 représente la façon dont une languette d'accrochage 62 est assemblée avec une fente dite "d'accrochage" 810, ménagée dans la cloison interne 81. Il y a autant de fentes d'accrochage 810 que de languettes 62. Dans ce cas, l'extrémité de la languette d'accrochage 62 est repliée uniquement une fois, dans la direction radiale de l'échangeur, de façon à être plaquée contre la face de la cloison interne 81 située en regard du canal d'évacuation des gaz 82, de préférence dans la direction radialement interne.

De façon avantageuse, une couche de colle 90 peut également être déposée entre la languette d'accrochage 62 et la paroi radiale intérieure 8101 de la fente 810 et/ou entre la languette d'accrochage 62 et la paroi radiale extérieure 8102 de la fente 810.

En pratique, durant le procédé de fabrication, le couvercle 87 de la manchette d'évacuation des gaz n'est pas fixé, tant que l'opération de sertissage des languettes d'accrochage 62 n'a pas été effectuée. L'absence de ce couvercle, permet en effet l'introduction de l'outil de sertissage, dans le canal 82, en regard de la languette 62, comme on le comprend à l'examen de la figure 4.

A cet endroit, les spires du tube 3 sont contraintes axialement entre la façade 7 et la cloison interne 81.

Par ailleurs et comme évoqué précédemment les languettes d'accrochage 62 sont en retrait par rapport aux languettes de fixation 61. En effet, comme on peut le voir sur la figure 4, comme la dernière spire arrière de l'enroulement du tube 3 se termine au niveau de l'embouchure d'entrée 31 et que celle-ci traverse l'ouverture 603 ménagée dans la virole 6, la languette de fixation 61 est avantageusement sertie sur le rebord saillant 802 du fond 8, (c'est-à-dire, dans une zone qui n'est pas à l'aplomb de la paroi externe 80 mais qui est légèrement décalée vers l'extérieur, c'est-à-dire vers la gauche sur la figure 4), de façon à conserver suffisamment du matériau de la virole 6 entre l'ouverture 603 et la languette de fixation 61 et ne pas fragiliser la virole à cet endroit. En revanche les languettes d'accrochage 62 sont fixées sur la cloison interne 81 qui se trouve en retrait par rapport au rebord 802.

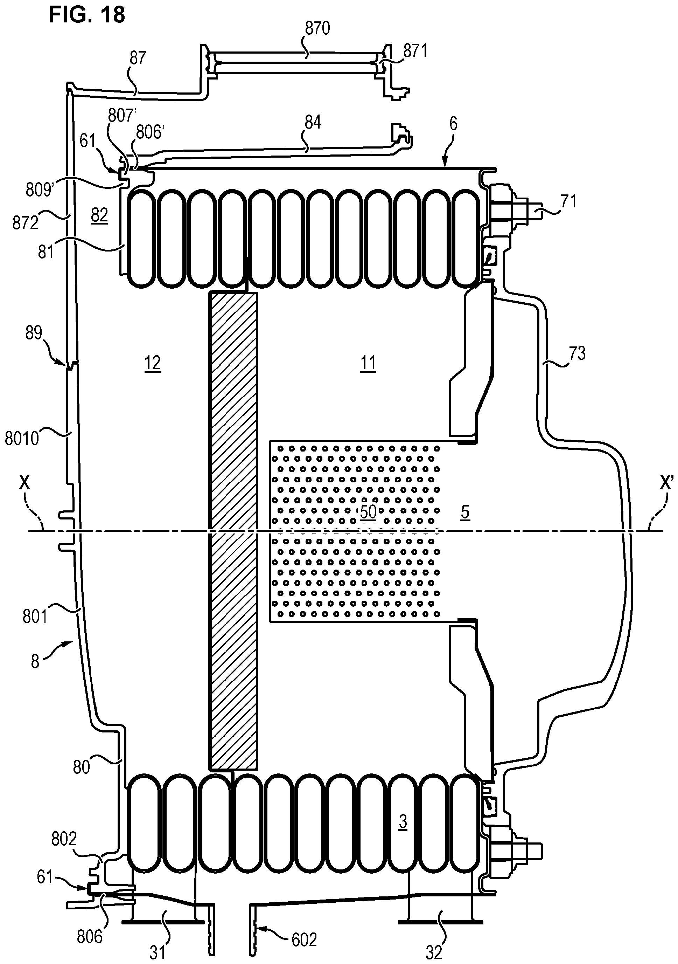

Sur la figure 18, on a représenté une autre variante de réalisation de l'invention, dans laquelle, la manchette d'évacuation des gaz 86 et le renfoncement 801 sont conformés différemment, ce qui permet d'avoir une virole 6 qui présente des languettes de fixation 61 sur la totalité de sa périphérie.

Plus précisément, dans ce cas, la paroi arrière 8010 du renfoncement 801 ne s'étend pas jusqu'en haut du fond 8 et le couvercle 87 comprend en revanche une cloison en retour 872 qui s'étend en direction du renfoncement 801 et en face de la cloison interne 81 pour délimiter avec celle-ci le canal d'évacuation des gaz 82. La ligne de jonction entre la cloison en retour 872 et le haut du renfoncement 801 est référencée 89. A ses deux extrémités la cloison interne 81 est solidaire des parois latérales 8011.

La cloison interne 81 comprend alors au moins une fente de fixation 806', bordée longitudinalement respectivement par une première nervure 807' (telle que décrite précédemment) et une cavité 809'. Chaque languette de fixation 61 est repliée deux fois autour de la nervure 807'.

Lors du sertissage des languettes de fixation 61, le couvercle 87 n'étant pas présent et la cloison interne 81 étant plus accessible, il est possible de replier deux fois les languettes de fixation 61. Une couche de résine 91 peut également être déposée sur ladite languette 61.

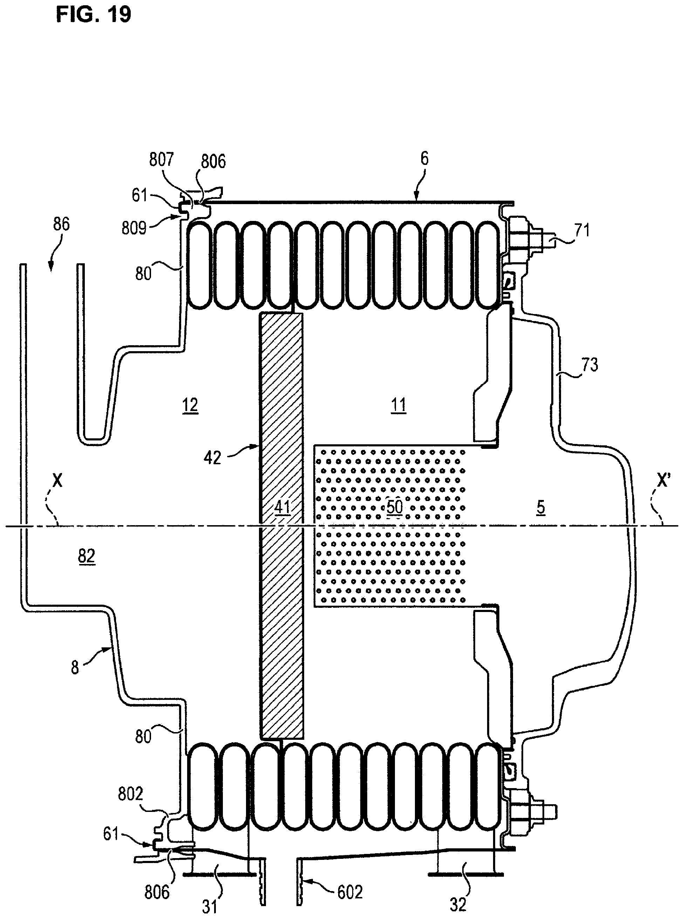

On comprend aisément que le fond 8 et la manchette d'évacuation des gaz pourraient présenter d'autres formes et que selon la position du canal 82 d'évacuation des gaz par rapport au fond 8, les fentes de fixation 806 précédemment décrites peuvent être prévues sur une partie de la circonférence du fond 8 ou sur la totalité de cette circonférence. Cette dernière possibilité pourrait s'appliquer par exemple si le canal 82 d'évacuation des gaz s'étendait à partir du fond 8, vers l'extérieur et selon l'axe longitudinal X-X' de l'échangeur (voir figure 19) avant de rejoindre la manchette d'évacuation des gaz 86. La dernière spire arrière de l'enroulement du tube 3 repose contre la cloison externe 80 et la compression axiale est assurée.

Des tests ont été effectués, afin de mesurer la résistance à la traction exercée sur la virole 6, dans le cas où le tube 3 viendrait à se déformer axialement et à pousser sur le fond 8.

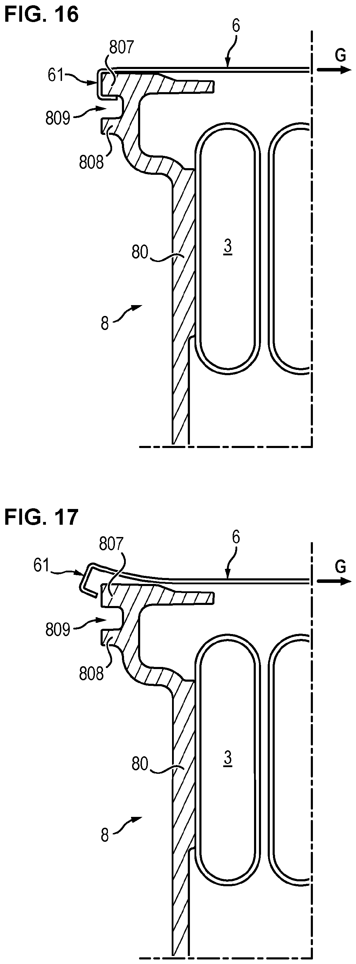

Les figures 16 et 17 schématisent la situation qui serait observée, si la languette de fixation 61 était simplement sertie autour de la nervure longitudinale 807 et ne passait pas au travers d'une fente de fixation 806. Dans ce cas, on constate que si l'on exerce une traction sur l'enveloppe 6, dans la direction axiale et selon le sens de la flèche G, et si cette traction dépasse un certain seuil, la languette 61 tend alors à se déformer et à se déplier, de sorte qu'elle ne joue plus son rôle de fixation entre l'enveloppe 6 et le fond 8.

Les tests ont ainsi montré qu'une languette de fixation 61 pouvait résister à une tenue à la traction de 65 kg, avant de se déformer, dans le cas représenté sur la figure 16, où la languette 61 n'est pas engagée dans une fente.

Dans le cas où la languette de fixation 61 est engagée dans une fente de fixation, comme représenté sur la figure 10, les tests ont montré que cette languette pouvait résister à une tenue à la traction de 110 kg, avant de se déformer. Enfin, les tests réalisés avec une languette de fixation repliée trois fois, comme représenté sur la figure 13A, ont montré que cette languette pouvait résister à une tenue à la traction de 140 kg.

Le déflecteur 4 comprend un disque 41 en matériau thermiquement isolant, porté par une armature en tôle métallique mince 42.

Ce déflecteur 4 peut être positionné de deux manières différentes par rapport au tube 3 de façon à former toujours au moins une chambre de combustion 11.

Selon un premier mode de réalisation illustré sur la figure 4, le déflecteur 4 est inséré dans le tube 3, de façon que le bord périphérique de l'armature 42 soit inséré entre deux spires adjacentes du tube 3. Ce déflecteur 4 définit ainsi une chambre de combustion 11, ménagée entre ce déflecteur et la façade 7 et une chambre de condensation 12, ménagée entre ce déflecteur et le fond 8.

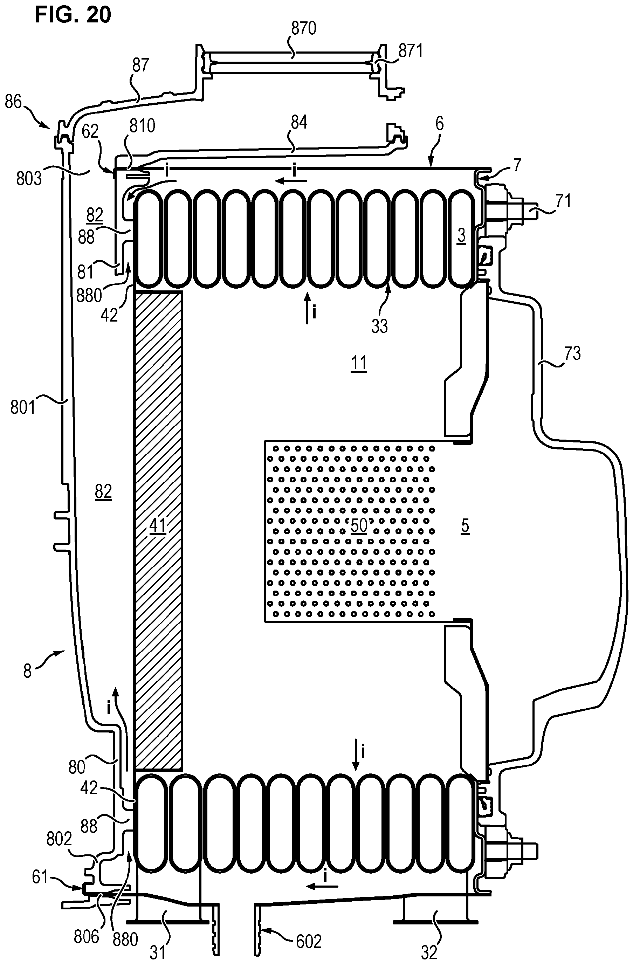

Selon un second mode de réalisation illustré sur la figure 20, le déflecteur 4 est positionné entre le fond 8 et la dernière spire dite "arrière" de l'enroulement du tube 3 (c'est-à-dire la spire située à proximité du fond 8). Dans ce cas, le déflecteur 4 définit uniquement une chambre de combustion 11 qui s'étend entre ce déflecteur et la façade 7. Dans ce cas, une pluralité d'entretoises 88 sont disposées entre le fond 8 et ladite armature 42 pour ménager entre ces deux éléments, un espace 880 de circulation des gaz, raccordé à ladite manchette d'évacuation des gaz 86, via le canal d'évacuation des gaz 82.

De façon avantageuse, les entretoises 88 sont ménagées sur la face tournée vers l'avant (vers la façade 7) de la cloison externe 80 et de la cloison interne 81.

L'assemblage des différents éléments de l'échangeur 1 peut s'effectuer par exemple comme suit.

Le tube 3, muni du déflecteur 4est inséré dans la virole 6, avant ou après que la bande qui constitue celle-ci ait été refermée et que la soudure 605 ait été réalisée. Les embouchures 31 et 32 sont serties et/ou soudées de manière étanche aux gaz dans les orifices 603 et 604.

La façade 7 est soudée sur le bord avant 606 de l'enveloppe 6. L'enveloppe 6 est approchée du fond 8, de façon que les languettes de fixation 61 pénètrent dans les fentes de fixation 806 et que les languettes d'accrochage 62 (lorsqu'elles sont présentes) pénètrent dans les fentes d'accrochage 810.

Le sertissage des différentes languettes 61, 62 est effectué comme expliqué précédemment. Enfin, le couvercle 87 de la manchette d'évacuation des gaz 86 est fixé sur le rebord 85 du fond 8.

On rappellera ci-après brièvement le fonctionnement de l'échangeur de chaleur à condensation 1 ainsi obtenu.

A l'intérieur de la chambre de combustion 11, les gaz chauds produits par le brûleur 50 passent dans les interstices 33 existants entre les spires adjacentes du tube 3, de l'intérieur vers l'extérieur, se heurtent à la virole 6, poursuivent dans la chambre de condensation 12, traversent de nouveau les interstices 33 existants entre les spires adjacentes du tube 3, cette fois de l'extérieur vers l'intérieur et ils sont ensuite évacués via le canal d'évacuation 82 et la manchette d'évacuation des gaz 86.

Dans le mode de réalisation représenté sur la figure 20, les gaz chauds produits par le brûleur 50 passent dans les interstices 33 existants entre les spires adjacentes du tube 3, de l'intérieur vers l'extérieur, se heurtent à la virole 6, traversent l'espace 880 de circulation des gaz et sont ensuite évacués via le canal d'évacuation 82 et la manchette d'évacuation des gaz 86 (voir flèches i).

Par ailleurs, le fluide à réchauffer circule de l'embouchure d'entrée 31 à l'embouchure de sortie 32, c'est-à-dire à contre-courant des gaz chauds.

L'échangeur conforme à l'invention présente donc de nombreux avantages. Le nombre total de pièces est réduit par rapport à un échangeur de l'état de la technique, les tirants sont supprimés tout en contraignant axialement l'enroulement du tube 3. Le montage est simplifié.

De plus, le fond 8 est compact, intègre la manchette d'évacuation des gaz et assure donc une fonction de fond d'enceinte, d'évacuation des gaz et participe à la contrainte axiale de l'enroulement du tube 3.

Enfin le fond 8 n'est pas sollicité en température du fait de la présence du déflecteur 4. Il est réalisé en une matière plastique composite, choisie avantageusement de façon à résister aux contraintes mécaniques que subit le fond 8 en cas d'écartement des spires du tube 3 dans la direction axiale. Ce matériau permet d'éviter tout risque d'électrolyse avec le matériau de la virole 6. L'ensemble de l'échangeur est donc moins coûteux que les échangeurs de l'état de la technique tout en garantissant la contrainte axiale de l'enroulement du tube 3 grâce au mode de fixation innovant de la virole 6 et du fond 8.

## Revendications

1. Echangeur de chaleur à condensation (1) comprenant :
- au moins un tube (3) enroulé en hélice, réalisé dans un matériau thermiquement bon conducteur, et à l'intérieur duquel peut circuler un fluide à réchauffer, tel que de l'eau,
- une enveloppe (2) à l'intérieur de laquelle ledit tube (3) est monté, cette enveloppe (2) étant munie d'une manchette d'évacuation des gaz (86), d'un fond (8) et d'une façade (7) qui supporte des moyens d'amenée et/ou de production d'un gaz chaud, à l'intérieur de l'enveloppe, tel un bruleur à gaz ou à fioul (50),
- un déflecteur (4) qui comprend un disque (41) en matériau thermiquement isolant, porté par une armature en tôle métallique (42), ledit déflecteur (4) étant positionné par rapport au tube (3) enroulé en hélice, de façon à délimiter avec ladite façade (7), une chambre de combustion (11),
ladite enveloppe (2) comprend un corps constitué par une virole métallique tubulaire (6), cette virole tubulaire (6) étant fermée à l'une de ses deux extrémités par ladite façade (7) et à son autre extrémité par ledit fond (8), en ce que ladite virole tubulaire (6) et ledit fond (8) sont distincts avant assemblage, en ce que ledit fond (8) est formé dans une matière plastique composite, en ce que l'un des deux bords de la virole tubulaire, dit « bord arrière » (607), présente sur au moins une partie de sa circonférence, une pluralité de découpes (63) délimitant des languettes de fixation (61),
le fond (8) présente à sa périphérie, une pluralité de fentes de fixation (806), disposées le long d'au moins une partie de sa circonférence, chaque fente de fixation (806) étant dimensionnée de façon qu'une languette de fixation (61) puisse y être insérée, chaque fente de fixation (806) étant bordée longitudinalement par une première nervure longitudinale (807), qui fait saillie vers l'extérieur, et en ce que ladite languette de fixation (61) est repliée deux fois autour de ladite première nervure (807), de sorte que la virole (6) est fixée audit fond (8) et que ledit enroulement hélicoïdal de tube (3) est contraint axialement à ses deux extrémités entre le fond (8) et la façade (7).

2. Échangeur (1) selon la revendication 1, **caractérisé en ce que** le fond (8) comprend :
- une cloison externe (80),
- un renfoncement (801) ménagé dans cette cloison externe, ce renfoncement (801) faisant saillie vers l'extérieur de l'échangeur et débouchant à la partie supérieure de celui-ci dans la manchette d'évacuation des gaz (86),
- et une cloison interne (81) joignant les deux côtés de la cloison externe (80) situés de part et d'autre de l'embouchure du renfoncement (801), cette cloison interne (81) délimitant avec le renfoncement (801) un canal d'évacuation des gaz (82) débouchant dans la manchette d'évacuation des gaz (86),
**en ce que** le bord arrière (607) de ladite virole tubulaire (6) présente une pluralité de découpes (63, 64) délimitant soit des languettes de fixation (61) sur la totalité de sa circonférence, soit des languettes de fixation (61) sur une partie de sa circonférence et au moins une languette d'accrochage (62) sur le reste de sa circonférence,
**en ce que** cette cloison interne (81) est munie d'au moins une fente (810, 806') de réception soit d'une languette d'accrochage (62) soit d'une languette de fixation (61), et **en ce que** la languette de fixation (61) ou la languette d'accrochage (62) qui est insérée dans cette fente de réception (810, 806') est repliée contre ladite cloison interne (81), pour assurer la fixation de la virole (6) avec ledit fond (8) et la contrainte axiale dudit tube (3) enroulé en hélice à l'une de ses extrémités par la façade (7) et à son autre extrémité par ladite cloison externe (80) et par ladite cloison interne (81) du fond (8).

3. Échangeur (1) selon la revendication 2, **caractérisé en ce que** le bord arrière (607) de ladite virole métallique tubulaire (6) est muni d'une pluralité de découpe (63) délimitant des languettes de fixation (61) et d'une pluralité de découpes (64) délimitant au moins une languette d'accrochage (62) et **en ce que** chaque fente de réception ménagée dans la cloison interne (81), dite fente d'accrochage (810), est dimensionnée de façon qu'une languette d'accrochage (62) puisse y être insérée, cette languette d'accrochage (62) étant repliée une seule fois contre la face de la cloison interne (81) située en regard dudit canal d'évacuation (82) des gaz.

4. Échangeur (1) selon la revendication 2, **caractérisé en ce que** le renfoncement (801) ménagé dans la cloison externe (80) présente une paroi arrière (8010) bordée par deux parois latérales (8011),
**en ce que** la manchette d'évacuation des gaz (86) comprend un couvercle (87) destiné à être rapporté et fixé sur le fond (8), **en ce que** ce couvercle (87) comprend une cloison en retour (872), cette cloison en retour (872) délimitant avec ladite cloison interne (81) et les deux parois latérales (8011), ledit canal d'évacuation des gaz (82) débouchant dans la manchette d'évacuation des gaz,
**en ce que** chaque fente de réception ménagée dans la cloison interne (81), dite fente de fixation (806'), est bordée longitudinalement par une première nervure longitudinale (807'),
**en ce que** le bord arrière (607) de ladite virole métallique tubulaire (6) est muni de languettes de fixation (61) sur la totalité de sa périphérie,
et **en ce qu'**une languette de fixation (61) est insérée dans chaque fente de fixation (806') et est repliée deux fois autour de ladite première nervure (807').

5. Échangeur (1) selon la revendication 1, **caractérisé en ce que** le fond (8) présente un canal d'évacuation des gaz (82) qui s'étend vers l'extérieur selon la direction axiale longitudinale (X-X') de l'échangeur, ce canal d'évacuation des gaz (82) rejoignant ladite manchette d'évacuation des gaz (86), **en ce que** le bord arrière (607) de ladite virole (6) présente lesdites languettes de fixation (61) sur la totalité de sa circonférence et **en ce que** le fond (8) présente sur la totalité de sa circonférence, lesdites fentes de fixation (806) recevant lesdites languettes de fixation (61).

6. Échangeur (1) selon l'une des revendications précédentes, **caractérisé en ce que** la première nervure longitudinale (807) présente une section transversale carrée ou rectangulaire et **en ce que** la languette de fixation (61) est repliée deux fois à angle droit autour des arêtes saillantes de cette première nervure longitudinale.

7. Échangeur (1) selon l'une des revendications précédentes, **caractérisé en ce qu'**une couche de colle est disposée entre la paroi radiale interne (8061, 8101) de la fente de fixation (806), respectivement de la fente d'accrochage (810), et la surface de la languette de fixation (61), respectivement de la languette d'accrochage (62), située en regard et/ou **en ce qu'**une couche de colle (90) est disposée entre la paroi radiale externe (8062, 8102) de la fente de fixation (806), respectivement de la fente d'accrochage (810), et la surface de la languette de fixation (61), respectivement de la languette d'accrochage (62), située en regard.

8. Échangeur (1) selon l'une des revendications précédentes, , **caractérisé en ce qu'**une deuxième nervure (808) est formée sur le fond (80) à proximité de ladite première nervure (807) pour délimiter avec celui-ci une cavité (809), **en ce que** la largeur et la profondeur de ladite cavité (809), ainsi que la longueur de la languette de fixation (61), sont dimensionnées de sorte que la languette de fixation (61) est repliée une troisième fois vers l'extérieur de l'échangeur et que son extrémité libre prend appui contre la face de la deuxième nervure (808) située en regard de la première nervure (807).

9. Echangeur (1) selon l'une quelconque des revendications précédentes, **caractérisé en ce qu'**une deuxième nervure (808) est formée sur le fond (80) à proximité de ladite première nervure (807) pour délimiter avec celui-ci une cavité (809) et **en ce qu'**une couche de résine (91) est disposée dans ladite cavité (809), de façon à recouvrir l'extrémité de la languette de fixation (61).

10. Echangeur (1) selon l'une des revendications précédentes, **caractérisé en ce que** ladite virole (6) est formée d'une bande de tôle métallique repliée et/ou recourbée sur elle-même et dont les deux extrémités sont assemblées, de préférence selon une ligne de soudure (605).

11. Echangeur (1) selon l'une des revendications précédentes, **caractérisé en ce que** ladite virole (6) est réalisée en acier inoxydable.

12. Echangeur (1) selon l'une des revendications précédentes, **caractérisé en ce que** l'armature (42) dudit déflecteur (4) est insérée entre deux spires adjacentes du tube (3) et définit avec ledit fond (8), une chambre de condensation (12).

13. Echangeur (1) selon l'une quelconque des revendications 1 à 11, **caractérisé en ce que** l'armature (42) dudit déflecteur (4) est insérée entre la dernière spire, dite "arrière" du tube (3) enroulé en hélice et le fond (8) et **en ce que** plusieurs entretoises (88) sont disposées entre ledit fond (8) et ladite armature (42), pour ménager entre ce fond et cette armature, un espace (880) de circulation des gaz raccordé à ladite manchette d'évacuation des gaz (86).

## Patentansprüche

1. Kondensationswärmetauscher (1), umfassend:
- mindestens ein schraubenförmig gewickeltes Rohr (3), das aus einem thermisch gut gleitenden Material hergestellt ist und in dessen Inneren ein zu erwärmendes Fluid wie Wasser zirkulieren kann,
- ein Gehäuse (2), in dessen Inneren das Rohr (3) angebracht ist, wobei dieses Gehäuse (2) mit einer Gasableitungsmanschette (86), einem Boden (8) und einer Front (7) versehen ist, die Zufuhr- und/oder Erzeugungsmittel eines warmen Gases im Inneren des Gehäuses wie ein Gas- oder Ölbrenner (50) trägt,
- einen Abweiser (4), der eine Scheibe (41) aus thermisch isolierendem Material umfasst, der von einem Rahmen aus Metallblech (42) getragen wird, wobei der Abweiser (4) im Verhältnis zum schraubenförmig gewickelten Rohr (3) derart positioniert ist, dass mit der Front (7) eine Brennkammer (11) begrenzt wird,
wobei das Gehäuse (2) einen Körper umfasst, der aus einem rohrförmigen Metallmantel (6) besteht, wobei dieser rohrförmige Mantel (6) an dem einen seiner zwei Enden durch die Front (7) und an seinem anderen Ende durch den Boden (8) verschlossen ist,
dass der rohrförmige Mantel (6) und der Boden (8) vor der Montage verschieden sind,
dass der Boden (8) aus einem Verbund-Kunststoffmaterial gebildet ist,
dass der eine der beiden Ränder des rohrförmigen Mantels, bezeichnet als "hinterer Rand" (607), auf mindestens einem Abschnitt seines Umfangs eine Vielzahl von Ausschnitten (63) aufweist, die Befestigungslaschen (61) begrenzen,
wobei der Boden (8) an seiner Peripherie eine Vielzahl von Befestigungsschlitzen (806) aufweist, die entlang von mindestens einem Abschnitt seines Umfangs angeordnet sind, wobei jeder Befestigungsschlitz (806) derart bemessen ist, dass eine Befestigungslasche (61) dort einsetzbar ist, wobei jeder Befestigungsschlitz (806) längs von einer ersten Längsrippe (807) gesäumt ist, die nach außen vorsteht, und dass die Befestigungslasche (61) zweimal um die erste Rippe (807) gefaltet ist, so dass der Mantel (6) am Boden (8) befestigt ist und dass die schraubenförmige Rohrwicklung (3) axial an ihren beiden Enden zwischen dem Boden (8) und der Front (7) gespannt ist.

2. Tauscher (1) nach Anspruch 1, **dadurch gekennzeichnet, dass** der Boden (8) umfasst:
- eine äußere Trennwand (80),
- eine Vertiefung (801), die in dieser äußeren Trennwand eingearbeitet ist, wobei die Vertiefung (801) nach außerhalb des Tauschers hervorsteht und im oberen Abschnitt desselben in der Gasableitungsmanschette (86) ausmündet,
- und eine innere Trennwand (81), die die beiden Seiten der äußeren Trennwand (80) verbindet, die sich beiderseits der Ausmündung der Vertiefung (801) befinden, wobei diese innere Trennwand (81) mit der Vertiefung (801) einen Gasableitungskanal (82) begrenzt, der in der Gasableitungsmanschette (86) ausmündet,
dass der hintere Rand (607) des rohrförmigen Mantels (6) eine Vielzahl von Ausschnitten (63, 64) aufweist, die entweder Befestigungslaschen (61) auf der Gesamtheit seines Umfangs oder Befestigungslaschen (61) auf einem Abschnitt seines Umfangs begrenzen und mindestens eine Arretierlasche (62) auf dem Rest seines Umfangs,
dass diese innere Trennwand (81) mit mindestens einem Schlitz (810, 806') zur Aufnahme entweder einer Arretierlasche (62) oder einer Befestigungslasche (61) versehen ist,
und dass die Befestigungslasche (61) oder die Arretierlasche (62), die in diesen Aufnahmeschlitz (810, 806') eingesetzt ist, an der inneren Trennwand (81) gefaltet ist, um die Befestigung des Mantels (6) mit dem Boden (8) und die axiale Spannung des schraubenförmig gewickelten Rohrs (3) an dem einen seiner Enden durch die Front (7) und an seinem anderen Ende durch die äußere Trennwand (80) und durch die innere Trennwand (81) des Bodens (8) sicherzustellen.

3. Tauscher (1) nach Anspruch 2, **dadurch gekennzeichnet, dass** der hintere Rand (607) des rohrförmigen Metallmantels (6) mit einer Vielzahl von Ausschnitten (63) versehen ist, die Befestigungslaschen (61) begrenzen, und einer Vielzahl von Ausschnitten (64), die mindestens eine Arretierlasche (62) begrenzen und dass jeder Aufnahmeschlitz, der in der inneren Trennwand (81) eingearbeitet ist, bezeichnet als Arretierschlitz (810), derart bemessen ist, dass dort eine Arretierlasche (62) einsetzbar ist, wobei diese Arretierlasche (62) ein einziges Mal an der Fläche der inneren Trennwand (81) gefaltet ist, die sich dem Gasableitungskanal (82) zugewandt befindet.

4. Tauscher (1) nach Anspruch 2, **dadurch gekennzeichnet, dass** die Vertiefung (801), die in der äußeren Trennwand (80) eingearbeitet ist, eine Rückwand (8010) aufweist, die von zwei Seitenwänden (8011) gesäumt ist,
dass die Gasableitungsmanschette (86) einen Deckel (87) umfasst, der bestimmt ist, auf dem Boden (8) angebracht und befestigt zu sein, dass dieser Deckel (87) eine rücklaufende Trennwand (872) umfasst, wobei diese rücklaufende Trennwand (872) mit der inneren Trennwand (81) und den zwei Seitenwänden (8011) den Gasableitungskanal (82) begrenzt, der in der Gasableitungsmanschette ausmündet,
dass jeder Aufnahmeschlitz, der in der inneren Trennwand (81), bezeichnet als Befestigungsschlitz (806'), eingearbeitet ist, längs von einer ersten Längsrippe (807') gesäumt ist,
dass der hintere Rand (607) des rohrförmigen Metallmantels (6) auf der Gesamtheit seiner Peripherie mit Befestigungslaschen (61) versehen ist,
und dass eine Befestigungslasche (61) in jeden Befestigungsschlitz (806') eingesetzt ist und zweimal um die erste Rippe (807') gefaltet ist.

5. Tauscher (1) nach Anspruch 1, **dadurch gekennzeichnet, dass** der Boden (8) einen Gasableitungskanal (82) aufweist, der sich in der axialen Längsrichtung (X-X') des Tauschers nach außen erstreckt, wobei dieser Gasableitungskanal (82) die Gasableitungsmanschette (86) erreicht, dass der hintere Rand (607) des Mantels (6) die Befestigungslaschen (61) auf der Gesamtheit seines Umfangs aufweist und dass der Boden (8) auf der Gesamtheit seines Umfangs die Befestigungsschlitze (806) aufweist, die die Befestigungslaschen (61) aufnehmen.

6. Tauscher (1) nach einem der vorangehenden Ansprüche, **dadurch gekennzeichnet, dass** die erste Längsrippe (807) einen quadratischen oder rechteckigen Querschnitt aufweist und dass die Befestigungslasche (61) zweimal im rechten Winkel um hervorstehende Kanten dieser ersten Längsrippe gefaltet ist.

7. Tauscher (1) nach einem der vorangehenden Ansprüche, **dadurch gekennzeichnet, dass** eine Kleberschicht zwischen der radialen inneren Trennwand (8061, 8101) des Befestigungsschlitzes (806) beziehungsweise des Arretierschlitzes (810) und der Oberfläche der Befestigungslasche (61) beziehungsweise der Arretierlasche (62) angeordnet ist, die sich zugewandt befindet und/oder dass eine Kleberschicht (90) zwischen der radialen äußeren Trennwand (8062, 8102) des Befestigungsschlitzes (806) beziehungsweise des Arretierschlitzes (810) und der Oberfläche der Befestigungslasche (61) beziehungsweise der Arretierlasche (62) angeordnet ist, die sich zugewandt befindet.

8. Tauscher (1) nach einem der vorangehenden Ansprüche, **dadurch gekennzeichnet, dass** eine zweite Rippe (808) auf dem Boden (80) in der Nähe der ersten Rippe (807) gebildet ist, um mit dieser einen Hohlraum (809) zu begrenzen, dass die Breite und die Tiefe des Hohlraums (809) sowie die Länge der Befestigungslasche (61) derart bemessen sind, dass die Befestigungslasche (61) ein drittes Mal nach außerhalb des Tauschers gefaltet ist und dass sich ihr freies Ende auf der Fläche der zweiten Rippe (808) abstützt, die sich der ersten Rippe (807) zugewandt befindet.

9. Tauscher (1) nach einem der vorangehenden Ansprüche, **dadurch gekennzeichnet, dass** eine zweite Rippe (808) auf dem Boden (80) in der Nähe der ersten Rippe (807) gebildet ist, um mit dieser einen Hohlraum (809) zu begrenzen und dass eine Harzschicht (91) in dem Hohlraum (809) angeordnet ist, so dass das Ende der Befestigungslasche (61) bedeckt ist.

10. Tauscher (1) nach einem der vorangehenden Ansprüche, **dadurch gekennzeichnet, dass** der Mantel (6) von einem auf sich selbst gefalteten und/oder gebogenen Metallblechband gebildet ist und dessen beide Enden zusammengefügt sind, bevorzugt anhand einer Schweißnaht (605) .

11. Tauscher (1) nach einem der vorangehenden Ansprüche, **dadurch gekennzeichnet, dass** der Mantel (6) aus rostfreiem Stahl hergestellt ist.

12. Tauscher (1) nach einem der vorangehenden Ansprüche, **dadurch gekennzeichnet, dass** der Rahmen (42) des Abweisers (4) zwischen zwei benachbarte Windungen des Rohrs (3) eingesetzt ist und mit dem Boden (8) eine Kondensationskammer (12) definiert.

13. Tauscher (1) nach einem der Ansprüche 1 bis 11, **dadurch gekennzeichnet, dass** der Rahmen (42) des Abweisers (4) zwischen der letzten Windung, bezeichnet als "hintere" des schraubenförmig gewickelten Rohrs (3), und dem Boden (8) eingesetzt ist und dass mehrere Verstrebungen (88) zwischen dem Boden (8) und dem Rahmen (42) angeordnet sind, um zwischen diesem Boden und diesem Rahmen einen Gaszirkulationsraum (880) zu bilden, der an die Gasableitungsmanschette (86) angeschlossen ist.

## Claims

1. A condensing heat exchanger (1) comprising:
- at least one helically wound tube (3) made of a thermally conductive material and inside which a fluid to be heated, such as water, can flow,
- a casing (2) inside which said tube (3) is mounted, this casing (2) being provided with a gas discharge sleeve (86), a bottom (8) and a facade (7), which supports means for delivering and/or producing a hot gas inside the casing, such as a gas or oil burner (50),
- a deflector (4) which comprises a disk (41) made of thermally insulating material, carried by a sheet metal reinforcement (42), said deflector (4) being positioned relative to the helically wound tube (3) so as to delimit, with said facade (7), a combustion chamber (11),
said casing (2) comprises a body consisting of a tubular metal ferrule (6), this tubular ferrule (6) being closed at one of its two ends by said facade (7) and at its other end by said bottom (8),
in that said tubular ferrule (6) and said bottom (8) are separate before assembly,
in that said bottom (8) is formed in a composite plastic material,
in that one of the two edges of the tubular ferrule, called "rear edge" (607), has on at least part of its circumference, a plurality of cutouts (63) delimiting fastening tabs (61),
in that the bottom (8) has at its periphery a plurality of fastening slots (806) disposed along at least part of its circumference, each fastening slot (806) being dimensioned so as a fastening tab (61) can be inserted therein, each fastening slot (806) being bordered longitudinally by a first longitudinal rib (807), which protrudes outwardly, and in that said fastening tab (61) is folded twice around said first rib (807), so that the ferrule (6) is fastened to said bottom (8) and said helical tube winding (3) is axially stressed at its two ends between the bottom (8) and the facade (7).

2. The exchanger (1) according to claim 1, **characterized in that** the bottom (8) comprises:
- an outer partition (80),
- a recess (801) arranged in this outer partition, this recess (801) protruding outwardly of the exchanger and opening out at the upper portion thereof into the gas discharge sleeve (86),
- and an inner partition (81) joining the two sides of the outer partition (80) located on either side of the mouth of the recess (801), this inner partition (81) delimiting with the recess (801) a gas discharge channel (82) opening out into the gas discharge sleeve (86),
**in that** the rear edge (607) of said tubular ferrule (6) has a plurality of cutouts (63, 64) delimiting either fastening tabs (61) over its entire circumference, or fastening tabs (61) over part of its circumference and at least one attachment tab (62) over the remainder of its circumference,
**in that** this inner partition (81) is provided with at least one slot (810, 806') for receiving either an attachment tab (62) or a fastening tab (61),
and **in that** the fastening tab (61) or the attachment tab (62) which is inserted into this receiving slot (810, 806') is folded against said inner partition (81), to ensure the fastening of the ferrule (6) with said bottom (8) and the axial stress of said helically wound tube (3) at one of its ends by the facade (7) and at its other end by said outer partition (80) and by said inner partition (81) of the bottom (8).

3. The exchanger (1) according to claim 2, **characterized in that** the rear edge (607) of said tubular metal ferrule (6) is provided with a plurality of cutouts (63) delimiting fastening tabs (61) and with a plurality of cutouts (64) delimiting at least one attachment tab (62) and **in that** each receiving slot arranged in the inner partition (81), called attachment slot (810), is dimensioned such that an attachment tab (62) can be inserted therein, this attachment tab (62) being folded once against the face of the inner partition (81) located opposite said gas discharge channel (82).

4. The exchanger (1) according to claim 2, **characterized in that** the recess (801) arranged in the outer partition (80) has a rear wall (8010) bordered by two side walls (8011),
**in that** the gas discharge sleeve (86) comprises a cover (87) intended to be added and fastened on the bottom (8), **in that** this cover (87) comprises a return partition (872), this return partition (872) delimiting with said inner partition (81) and the two side walls (8011), said gas discharge channel (82) opening out into the gas discharge sleeve,
**in that** each receiving slot arranged in the inner partition (81), called fastening slot (806'), is bordered longitudinally by a first longitudinal rib (807'),
**in that** the rear edge (607) of said tubular metal ferrule (6) is provided with fastening tabs (61) over its entire periphery,
and **in that** a fastening tab (61) is inserted into each fastening slot (806') and is folded twice around said first rib (807').

5. The exchanger (1) according to claim 1, **characterized in that** the bottom (8) has a gas discharge channel (82) which extends outwardly along the longitudinal axial direction (XX') of the exchanger, this gas discharge channel (82) joining said gas discharge sleeve (86), **in that** the rear edge (607) of said ferrule (6) has said fastening tabs (61) over its entire circumference and **in that** the bottom (8) has over its entire circumference said fastening slots (806) receiving said fastening tabs (61).

6. The exchanger (1) according to any of the preceding claims, **characterized in that** the first longitudinal rib (807) has a square or rectangular cross-section and **in that** the fastening tab (61) is folded twice at right angles around the protruding ridges of this first longitudinal rib.

7. The exchanger (1) according to any of the preceding claims, **characterized in that** an adhesive layer is disposed between the inner radial wall (8061, 8101) of the fastening slot (806), respectively of the slot attachment (810), and the surface of the fastening tab (61), respectively of the attachment tab (62), located oppositely and/or **in that** an adhesive layer (90) is disposed between the outer radial wall (8062, 8102) of the fastening slot (806), respectively of the attachment slot (810), and the surface of the fastening tab (61), respectively of the attachment tab (62), located oppositely.

8. The exchanger (1) according to any of the preceding claims, **characterized in that** a second rib (808) is formed on the bottom (80) in the vicinity of said first rib (807) in order to delimit a cavity (809) therewith, **in that** the width and depth of said cavity (809), as well as the length of the fastening tab (61), are dimensioned so that the fastening tab (61) is folded a third time outwardly of the exchanger and its free end bears against the face of the second rib (808) located opposite the first rib (807).

9. The exchanger (1) according to any one of the preceding claims, **characterized in that** a second rib (808) is formed on the bottom (80) in the vicinity of said first rib (807) to delimit a cavity (809) therewith and **in that** a resin layer (91) is disposed in said cavity (809), so as to cover the end of the fastening tab (61).

10. The exchanger (1) according to any of the preceding claims, **characterized in that** said ferrule (6) is formed of a sheet metal strip folded and/or curved on itself and whose both ends are assembled, preferably along a weld line (605).

11. The exchanger (1) according to any of the preceding claims, **characterized in that** said ferrule (6) is made of stainless steel.

12. The exchanger (1) according to any of the preceding claims, **characterized in that** the reinforcement (42) of said deflector (4) is inserted between two adjacent turns of the tube (3) and defines with said bottom (8), a condensation chamber (12).

13. The exchanger (1) according to any one of claims 1 to 11, **characterized in that** the reinforcement (42) of said deflector (4) is inserted between the last turn, called "rear" turn of the helically wound tube (3) and the bottom (8) and **in that** several spacers (88) are disposed between said bottom (8) and said reinforcement (42), to arrange between this bottom and this reinforcement, a gas flow space (880) connected to said gas discharge sleeve (86).
